# EUROPEAN PATENT APPLICATION

(11) **EP 4 718 133 A1**
(43) Date of publication of application: **01.04.2026**
(21) Application number: 24830147.5
(22) Date of filing: 06.05.2024
(51) Int. Cl.: G02B 6/27

(54) **OPTICAL CHIP, OPTICAL CHIP MANUFACTURING METHOD, OPTICAL SIGNAL TRANSMISSION METHOD, AND OPTICAL MODULE**

(30) Priority: 26.06.2023 CN 202310757931
(71) Applicant: Huawei Technologies Co., Ltd., Shenzhen, Guangdong 518129 (CN)
(72) Inventor: LI, Xiuli, Shenzhen, Guangdong 518129 (CN); XIA, Yuan, Shenzhen, Guangdong 518129 (CN); XU, Chengwen, Shenzhen, Guangdong 518129 (CN); WAN, Yujuan, Shenzhen, Guangdong 518129 (CN); TASSAERT, Martijn, Shenzhen, Guangdong 518129 (CN); TROIA, Benedetto, Shenzhen, Guangdong 518129 (CN)
(74) Representative: Thun, Clemens
(86) International application number: PCT/CN2024/091222
(87) International publication number: WO 2025/001499

(57) **Abstract**

This application provides an optical chip, an optical chip fabrication method, an optical signal transmission method, and an optical module. The optical chip includes: an optical port, coupled to a fiber and configured to receive a first optical signal from the fiber, where the first optical signal includes a component in a transverse magnetic TM mode; a polarization splitter and rotator PSR, configured to perform first processing on the first optical signal to generate a second optical signal, where the second optical signal is in a transverse electric TE mode, and the second optical signal is a single-channel multi-wavelength optical signal; at least one wavelength demultiplexer DeMux, configured to perform second processing on the second optical signal to generate a third optical signal, where the third optical signal is a multi-channel single-wavelength optical signal; and a photodetector array, configured to convert the third optical signal into an electrical signal. The optical port, the PSR, and the at least one DeMux are made of silicon nitride SiN.

## Description

This application claims priority to Chinese Patent Application No. 202310757931.5, filed with the China National Intellectual Property Administration on June 26, 2023 and entitled "OPTICAL CHIP, OPTICAL CHIP FABRICATION METHOD, OPTICAL SIGNAL TRANSMISSION METHOD, AND OPTICAL MODULE", which is incorporated herein by reference in its entirety.

### TECHNICAL FIELD

This application relates to the field of optoelectronic communication, and more specifically, to an optical chip, an optical chip fabrication method, an optical signal transmission method, and an optical module.

### BACKGROUND

With rapid growth of data traffic, there is a higher requirement for high-speed and low-cost optical communication. To obtain a higher transmission speed, there are three solutions: increasing a single-channel rate, increasing a quantity of data transmission channels, and multiplexing a plurality of wavelengths into one fiber for transmission through wavelength division multiplexing. A wavelength division multiplexing/demultiplexing function can be used to effectively reduce a quantity of used fibers, reduce communication system costs, and increase a data transmission rate. A receiver optical chip is a core component of optical signal-electrical signal conversion in an optical communication system, and mainly includes a passive optical device and a photodetector.

Currently, the wavelength division demultiplexing receiver optical chip is mainly an on-chip integrated chip fabricated through surface-mount packaging performed between a photodetector (photodetector, PD) and a planar lightwave circuit (planar lightwave circuit, PLC) of an arrayed waveguide grating (arrayed waveguide grating, AWG) filter made of a silicon dioxide SiO₂ material, or an integrated chip fabricated by using a germanium Ge PD, an AWG filter made of a SiO₂ material, and a Si passive device integrated on a silicon-on-insulator (silicon-on-insulator, SOI) platform. However, a wavelength demultiplexer (wavelength demultiplexer, DeMux) made of a Si material has a high insertion loss, and a large temperature drift coefficient, requires temperature cooling control, and has high costs.

### SUMMARY

This application provides an optical chip, to implement on-chip integration of a non-cooling low-loss wavelength division demultiplexing receiver optical chip through silicon nitride SiN-SOI hybrid integration by using a passive device like DeMux made of a SiN material and an active photodetector with excellent performance fabricated by using an SOI platform compatible with a complementary metal-oxide-semiconductor (complementary metal-oxide-semiconductor, CMOS).

According to a first aspect, an optical chip is provided. The optical chip includes: an optical port, coupled to a fiber and configured to receive a first optical signal from the fiber, where the first optical signal includes a component in a transverse magnetic TM mode; a polarization splitter and rotator PSR, configured to perform first processing on the first optical signal to generate a second optical signal, where the second optical signal is in a transverse electric TE mode, and the second optical signal is a single-channel multi-wavelength optical signal; at least one wavelength demultiplexer DeMux, configured to perform second processing on the second optical signal to generate a third optical signal, where the third optical signal is a multi-channel single-wavelength optical signal; and a photodetector array, configured to convert the third optical signal into an electrical signal. The optical port, the PSR, and the at least one DeMux are made of silicon nitride SiN.

The single-channel multi-wavelength optical signal may be understood as that light including a plurality of wavelengths in the optical signal is transmitted through one optical path propagation path (for example, a fiber or a waveguide). Correspondingly, the multi-channel single-wavelength optical signal may be understood as that there are a plurality of optical path propagation paths, and the optical signal of a single wavelength is transmitted through each channel. Similar expressions in this application may be understood in this way, and details are not described below again.

According to the solution of this application, a passive device like the DeMux is made of a SiN material, so that the optical chip is insensitive to a temperature, has a low insertion loss, does not need to be controlled by a cooler, and has low costs.

It should be understood that the PSR is coupled to the optical port through a first waveguide, and the at least one DeMux is coupled to the PSR through a second waveguide. The first waveguide and the second waveguide are made of SiN.

With reference to the first aspect, in some implementations of the first aspect, the photodetector array is connected to the at least one DeMux through a third waveguide, and the third waveguide is made of SiN.

With reference to the first aspect, in some implementations of the first aspect, the optical chip further includes a waveguide conversion structure, configured to couple and transmit the third optical signal from a third waveguide to a fourth waveguide, and including a first part and a second part, where the first part is coupled to the at least one DeMux through the third waveguide, the second part is coupled to the photodetector array through the fourth waveguide, and the first part and the fourth waveguide are made of SiN.

With reference to the first aspect, in some implementations of the first aspect, the second part of the waveguide conversion structure and the second waveguide are made of silicon Si.

With reference to the first aspect, in some implementations of the first aspect, the DeMux includes M levels of cascaded filter units, where an i^{th}-level cascaded filter unit includes 2ⁱ directional coupler Mach-Zehnder interferometers DCMZIs or 2ⁱ ring-assisted Mach-Zehnder interferometers RMZIs, the DCMZI includes N repeated DCMZI filter structures, the DCMZI filter structure includes two waveguide arms, the RMZI includes L repeated RMZI filter structures, the RMZI filter structure includes a microring resonant cavity, M, N, and L are positive integers, and i∈[1, M].

It should be understood that, in this case, the third optical signal includes 2^{M} single-wavelength optical signals of different wavelengths.

With reference to the first aspect, in some implementations of the first aspect, the DeMux is an arrayed waveguide grating AWG filter, the AWG filter includes an output port and an arrayed waveguide, the third optical signal is output through the output port, and the third optical signal includes K single-wavelength optical signals of different wavelengths.

With reference to the first aspect, in some implementations of the first aspect, the DeMux further includes 2^{M} arrayed waveguide grating AWG filters, the AWG filter is connected to an M^{th}-level cascaded filter unit in the M levels of cascaded filter units, each AWG filter includes an output port and an arrayed waveguide, the third optical signal is output through the output port, and the third optical signal includes K×2^{M} single-wavelength optical signals of different wavelengths

With reference to the first aspect, in some implementations of the first aspect, the photodetector array uses at least one of the following structures: a PN junction photodiode PN PD, a PIN photodiode PIN PD, an avalanche photodiode APD, a single-photon avalanche diode SPAD, a Schottky barrier diode SBD, and a silicon photomultiplier SiPM.

With reference to the first aspect, in some implementations of the first aspect, the photodetector array is a detector made of a semiconductor material that is epitaxially grown on a silicon-on-insulator SOI.

With reference to the first aspect, in some implementations of the first aspect, the optical chip further includes at least one of a semiconductor optical amplifier SOA, a laser diode LD, a modulator, a heater (heater), a variable optical attenuator VOA, and a multiplexer Mux.

According to the solution of this application, SiN-SOI hybrid integration is used, a passive device like a DeMux is made of a SiN material, and an active photodetector with excellent performance is fabricated by using an SOI platform compatible with a CMOS, so that an on-chip integrated wavelength division demultiplexing receiver optical chip does not need to be cooled, and has a low loss.

According to a second aspect, an optical signal transmission method is provided. The method includes: A first optical signal enters an optical chip from a fiber through an optical port coupled to the fiber, where the first optical signal includes a component in a transverse magnetic TM mode; performing, by a polarization splitter and rotator PSR, first processing on the first optical signal to generate a second optical signal, where the second optical signal is in a transverse electric TE mode, and the second optical signal is a single-channel multi-wavelength optical signal; performing, by at least one wavelength demultiplexer DeMux, second processing on the second optical signal to generate a third optical signal, where the third optical signal is a multi-channel single-wavelength optical signal; and converting, by a photodetector array, the third optical signal into an electrical signal. The optical port, the PSR, and the at least one DeMux are made of silicon nitride SiN.

It should be understood that the PSR is coupled to the optical port through a first waveguide, and the at least one DeMux is coupled to the PSR through a second waveguide. The first waveguide and the second waveguide are made of SiN.

With reference to the second aspect, in some implementations of the second aspect, the photodetector array is connected to the at least one DeMux through a third waveguide, and the third waveguide is made of SiN.

With reference to the second aspect, in some implementations of the second aspect, the third optical signal is further coupled and transmitted from a third waveguide to a fourth waveguide by using a waveguide conversion structure, the waveguide conversion structure includes a first part and a second part, the first part is coupled to the at least one DeMux through the third waveguide, the second part is coupled to the photodetector array through the fourth waveguide, and the first part and the third waveguide are made of SiN.

With reference to the second aspect, in some implementations of the second aspect, the second part of the waveguide conversion structure and the fourth waveguide are made of silicon Si.

With reference to the second aspect, in some implementations of the second aspect, the DeMux includes M levels of cascaded filter units, where an i^{th}-level cascaded filter unit includes 2ⁱ directional coupler Mach-Zehnder interferometers DCMZIs or 2ⁱ ring-assisted Mach-Zehnder interferometers RMZIs, the DCMZI includes N repeated DCMZI filter structures, the DCMZI filter structure includes two waveguide arms, the RMZI includes L repeated RMZI filter structures, the RMZI filter structure includes a microring resonant cavity, M, N, and L are positive integers, and i∈[1, M].

It should be understood that, in this case, the third optical signal includes 2^{M} single-wavelength optical signals of different wavelengths.

With reference to the second aspect, in some implementations of the second aspect, the DeMux is an arrayed waveguide grating AWG filter, where the AWG filter includes an output port and an arrayed waveguide, the third optical signal is output through the output port, and the third optical signal includes K single-wavelength optical signals of different wavelengths

With reference to the second aspect, in some implementations of the second aspect, the DeMux further includes 2^{M} arrayed waveguide grating AWG filters, where the AWG filter is connected to an M^{th}-level cascaded filter unit in the M levels of cascaded filter units, each AWG filter includes an output port and an arrayed waveguide, the third optical signal is output through the output port, and the third optical signal includes K×2^{M} single-wavelength optical signals of different wavelengths

According to a third aspect, an optical chip fabrication method is provided. The method includes: providing a silicon-on-insulator SOI substrate, where the SOI includes a silicon substrate and an oxide layer; disposing an optical port, a polarization splitter and rotator PSR, and at least one wavelength demultiplexer DeMux in the oxide layer; and fabricating a photodetector array on the silicon substrate. The optical port, the PSR, and the at least one DeMux are made of silicon nitride SiN. The optical port is coupled to a fiber, and is configured to receive a first optical signal from the fiber, where the first optical signal includes a component in a transverse magnetic TM mode. The PSR is configured to perform first processing on the first optical signal to generate a second optical signal, where the second optical signal is in a transverse electric TE mode, and the second optical signal is a single-channel multi-wavelength optical signal. The at least one DeMux is configured to perform second processing on the second optical signal to generate a third optical signal, where the third optical signal is a multi-channel single-wavelength optical signal. The photodetector array is configured to convert the third optical signal into an electrical signal.

With reference to the third aspect, in some implementations of the third aspect, the method further includes: fabricating a first waveguide and a second waveguide, where the PSR is coupled to the optical port through the first waveguide, the at least one DeMux is coupled to the PSR through the second waveguide, and the first waveguide and the second waveguide are made of SiN.

With reference to the third aspect, in some implementations of the third aspect, the method further includes: fabricating a third waveguide, where the photodetector array is connected to the at least one DeMux through the third waveguide, and the third waveguide is made of SiN.

With reference to the third aspect, in some implementations of the third aspect, the method further includes: disposing a waveguide conversion structure, and fabricating a fourth waveguide, where the waveguide conversion structure is configured to couple and transmit the third optical signal from the third waveguide to the fourth waveguide, and includes a first part and a second part, the first part is coupled to the at least one DeMux through the third waveguide, the second part is coupled to the photodetector array through the fourth waveguide, and the first part and the third waveguide are made of SiN.

With reference to the third aspect, in some implementations of the third aspect, the second part of the waveguide conversion structure and the fourth waveguide are made of silicon Si.

With reference to the third aspect, in some implementations of the third aspect, the DeMux includes M levels of cascaded filter units, where an i^{th}-level cascaded filter unit includes 2ⁱ directional coupler Mach-Zehnder interferometers DCMZIs or 2ⁱ ring-assisted Mach-Zehnder interferometers RMZIs, the DCMZI includes N repeated DCMZI filter structures, the DCMZI filter structure includes two waveguide arms, the RMZI includes L repeated RMZI filter structures, the RMZI filter structure includes a microring resonant cavity, M, N, and L are positive integers, and i∈[1, M].

With reference to the third aspect, in some implementations of the third aspect, the DeMux is an arrayed waveguide grating AWG filter, where the AWG filter includes an output port and an arrayed waveguide, the third optical signal is output through the output port, and the third optical signal includes K single-wavelength optical signals of different wavelengths

With reference to the third aspect, in some implementations of the third aspect, the DeMux further includes 2^{M} arrayed waveguide grating AWG filters, where the AWG filter is connected to an M^{th}-level cascaded filter unit in the M levels of cascaded filter units, each AWG filter includes an output port and an arrayed waveguide, the third optical signal is output through the output port, and the third optical signal includes K×2^{M} single-wavelength optical signals of different wavelengths.

With reference to the third aspect, in some implementations of the third aspect, the photodetector array uses at least one of the following structures: a PN junction photodiode PN PD, a PIN photodiode PIN PD, an avalanche photodiode APD, a single-photon avalanche diode SPAD, a Schottky barrier diode SBD, and a silicon photomultiplier SiPM.

With reference to the third aspect, in some implementations of the third aspect, the method further includes: disposing at least one of a semiconductor optical amplifier SOA, a laser diode LD, a modulator, a heater (heater), a variable optical attenuator VOA, and a multiplexer Mux.

According to a fourth aspect, an optical module is provided. The optical module includes: a housing; a substrate; an electrical chip, configured to: generate a radio frequency signal or process a radio frequency signal, and located on the substrate; the optical chip according to the first aspect and the possible implementations of the first aspect, located on the substrate; and a signal line, located on the substrate, and configured to transmit the radio frequency signal between the electrical chip and the optical chip.

According to a fifth aspect, a communication device is provided. The communication device includes: a receiver, including the optical module according to the fourth aspect; and/or a transmitter, including the optical module according to the fourth aspect.

According to a sixth aspect, a communication device is provided. The communication device includes: a transceiver, configured to receive or send a signal, where the transceiver includes the optical module according to the fourth aspect, and the optical module is configured to modulate or demodulate the signal; and a processor, configured to perform signal processing on the signal.

Specifically, for beneficial effect of other aspects, refer to the beneficial effect described in the first aspect.

### BRIEF DESCRIPTION OF DRAWINGS

FIG. 1 is a layout diagram of an implementation of an optical demultiplexing receiver chip according to an embodiment of this application;
FIG. 2 is a layout diagram of another implementation of an optical demultiplexing receiver chip according to an embodiment of this application;
FIG. 3 is a cross-sectional diagram of an optical demultiplexing receiver chip according to an embodiment of this application;
FIG. 4 is a top view and a side view of a possible implementation of a waveguide conversion structure according to an embodiment of this application;
FIG. 5 is a diagram of a structure of a wavelength demultiplexer according to an embodiment of this application;
FIG. 6 is a diagram of a spectrum output by a wavelength demultiplexer according to an embodiment of this application;
FIG. 7 is a diagram of a structure of another wavelength demultiplexer according to an embodiment of this application;
FIG. 8 is a diagram of a structure of another spectrum output by a wavelength demultiplexer according to an embodiment of this application;
FIG. 9 is a diagram of a structure of another wavelength demultiplexer according to an embodiment of this application;
FIG. 10 is a diagram of a structure of another wavelength demultiplexer according to an embodiment of this application; and
FIG. 11 is a diagram of a structure of another wavelength demultiplexer according to an embodiment of this application.

### DESCRIPTION OF EMBODIMENTS

The following describes technical solutions of this application with reference to accompanying drawings.

First, the terms "include", "have" and any other variants in embodiments of this application shown below are intended to cover the non-exclusive inclusion. For example, a system, product, or device that includes a series of units is not necessarily limited to those units expressly listed, but may include other units not expressly listed or inherent to such a product or device.

Second, in embodiments of this application, the term like "for example" or "example" is used to represent giving an example, an illustration, or a description. An embodiment or a design scheme described with "example" or "for example" shall not be explained as being more preferred or having more advantages than another embodiment or design scheme. The term like "example" or "for example" is used to present a related concept in a specific manner for ease of understanding.

Third, in the following text descriptions or accompanying drawings in embodiments of this application, terms such as "first" and "second" and various numbers are merely used for differentiation for ease of description, but do not necessarily describe a specific order or sequence, and are not intended to limit the scope of embodiments of this application.

An optical path of a waveguide chip is fabricated by using an integrated circuit (integrated circuit) technology, and various functions of conventional discrete optical elements are integrated into a same optical substrate surface, to complete an optical information processing capability of a conventional large optical system including a plurality of discrete optical elements, and implement functions such as optical signal generation and detection, optical power distribution, an optical switch, and optical filtering. With rapid development of a fiber communication technology, this technology has also developed rapidly, and gradually formed unique characteristics. In addition, most functional structures are on a same optical substrate, and a main structure is an optical waveguide channel. Therefore, this technology is referred to as a planar lightwave circuit (planar lightwave circuit, PLC) technology.

The planar lightwave circuit technology is developed based on the integrated circuit technology and has the unique characteristics. Basic components of an integrated circuit are a resistor, a capacitor, an inductor, and a transistor (a diode and a triode). In the integrated circuit technology, these basic components are fabricated on a silicon substrate by using processes such as thin film deposition, diffusion, epitaxy, photolithography, etching, and annealing, and are interconnected through conducting wires. Basic components of a planar lightwave circuit are a laser, an optical waveguide, and a detector, and use different substrate materials, such as III-V compound semiconductors (InP and GaAs), silicon dioxide (SiO₂), lithium niobate (LiNbO3), silicon-on-insulator SOI substrate, polymer (polymer), and glass. Different materials indicate a plurality of types of fabrication processes.

A planar lightwave circuit device is a device fabricated by using the planar lightwave circuit technology, and is classified into a passive device, an active device, and an active/passive hybrid integrated device. The passive device may be understood as a device that does not require energy source (power supply) and may be configured to implement functions such as transmission, demultiplexing, multiplexing, and filtering of an optical signal. The passive device mainly includes a planar lightwave circuit splitter, an arrayed waveguide grating (arrayed waveguide grating, AWG), an optical filter, and the like.

In a possible implementation, a discrete AWG may be used to assemble a wavelength division demultiplexing receiver optoelectronic chip through surface-mounting, the AWG made of a Si material implements a wavelength division demultiplexing function, and light output by the AWG is coupled to a vertically-structured PD through mirror reflection.

It should be understood that the optical chip in the foregoing implementation has low fabrication precision, a large device size, a low device yield, and high costs; a coupling loss from the PLC to the PD is high; and sensitivity of a receiving optical sub-assembly (receiving optical sub-assembly, ROSA) is reduced when a wavelength is at a sideband position.

In another possible implementation, a CWDM4 chip is integrated based on a SOI platform, and an EDG filter made of a Si material is used in a receiver optical chip, to implement a wavelength division multiplexing/demultiplexing function, and a plurality of incident wavelengths are filtered to four channels. A waveguide-coupled vertical Ge PD photodetector is used to implement optical-to-electrical conversion. The optical chip is insensitive to polarization.

In the foregoing implementation, the optical chip has low fabrication precision, an EDG insertion loss is high, an EDG is sensitive to a temperature, and a cooler is required to control temperature drift. A filter spectrum has a narrow passband (passband) of 1 dB and a narrow flat top.

It should be understood that a DeMux made of the Si material has a high insertion loss, and a large temperature drift coefficient, requires temperature cooling control, and has high costs. Based on the foregoing problems, this application provides the following embodiments. On-chip integration of a non-cooling low-loss wavelength division demultiplexing receiver optical chip can be implemented through SiN-SOI hybrid integration by using a passive device like DeMux made of a SiN material and an active photodetector with excellent performance fabricated by using an SOI platform compatible with a CMOS.

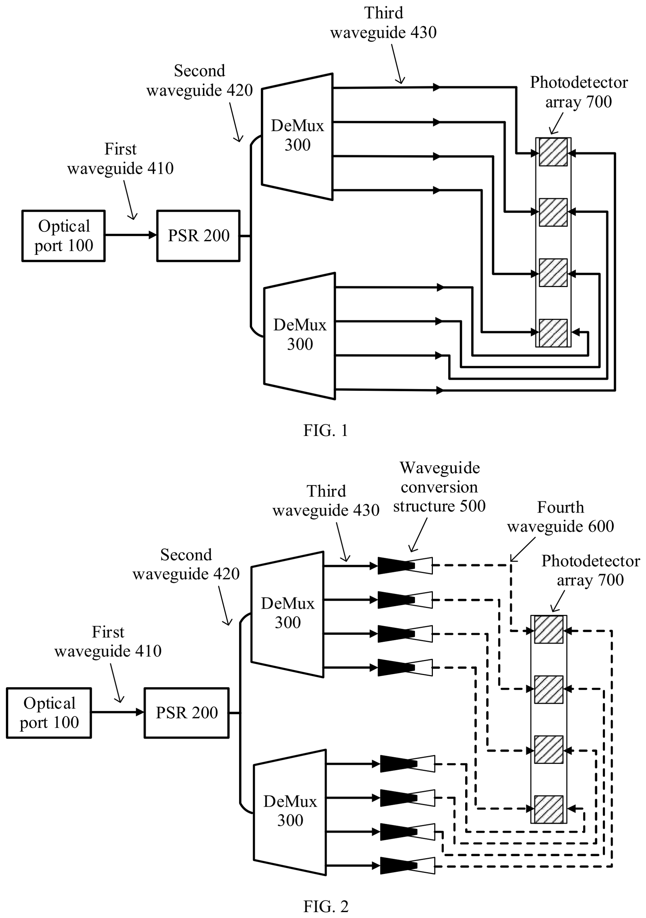

FIG. 1 is a layout diagram of an implementation of an optical demultiplexing receiver chip according to this application. As shown in FIG. 1, an optical chip includes at least the following parts.

An optical port 100 is coupled to a fiber, and is configured to receive a first optical signal from the fiber.

The optical port may also be referred to as an optical coupler, an optical port coupling structure, an optical input port, a fiber end face coupler, or the like. This is not limited in this application.

A polarization splitter and rotator (polarization splitter and rotator, PSR) 200 is configured to perform first processing on the input first optical signal to generate a second optical signal. The second optical signal is in a transverse electric (transverse electric, TE) mode. Specifically, an input non-single-polarized light is split into two beams of polarized light with orthogonal polarization states, and one polarization state is converted into another polarization state. For example, an input optical signal in a transverse magnetic (transverse magnetic, TM) mode is converted into an optical signal in the TE mode.

The PSR 200 implements mode-polarization rotation of the input light, converts the input optical signal in the TM mode into the optical signal in the TE mode, and outputs the optical signal in the TE mode through one port. The optical signal in the TE mode is transmitted in the TE mode and output through the other port.

At least one wavelength demultiplexer (demultiplexer, DeMux) 300 is configured to perform second processing on the second optical signal to generate a third optical signal, where the third optical signal is a multi-channel single-wavelength optical signal, in other words, the single-channel multi-wavelength optical signal is processed to obtain the multi-channel single-wavelength optical signal. The DeMux 300 may filter multi-wavelength optical signals input through a single channel, and output the multi-wavelength optical signals through different channels. A wavelength spacing between the channels is adjustable. In addition, the DeMux 300 meets a coarse wavelength division multiplexing (coarse wavelength division multiplexing, CWDM) application standard and a lan wavelength division multiplexing (lan wavelength division multiplexing, LWDM) application standard.

In a possible implementation, as shown in FIG. 1, the two ports of the PSR 200 each carry a TE signal component and a TM signal component of an original optical signal. Therefore, the two ports need to be connected to two groups of same DeMuxes respectively. Then, the two groups of DeMuxes are connected to PDs on a same channel, and photocurrents at the PDs are added in parallel, to implement complete optical-to-electrical conversion of the original optical signal.

In another possible implementation, a TE signal component and a TM signal component of an original optical signal are respectively carried at the two ports of the PSR 200. The two TE beams are directly multiplexed by using a device, so that the two ports can be connected to only one DeMux. Alternatively, if there is no need to consider a polarization balance of receiver responsivity, a port on either a TE channel or a TM channel can be connected to the DeMux.

A photodetector array 700 is configured to convert the optical signal into an electrical signal.

The photodetector array 700 may be a PN junction photodiode, a PIN photodiode (PIN photodiode, PIN-PD), an avalanche photodiode (avalanche photodiode, APD), a single-photon avalanche diode (single-photon avalanche diode, SPAD), a Schottky barrier diode (Schottky barrier diode, SBD), a silicon photomultiplier (silicon photomultiplier, SiPM), and the like, or may be a combination of a plurality of sensor devices. This is not limited in this application, provided that a function of converting the optical signal into the electrical signal can be implemented. Similar devices or a combination of devices should fall within the protection scope of this application.

The optical port 100 is coupled to the PSR 200 through a first waveguide 410, the PSR 200 is coupled to the DeMux 300 through a second waveguide 420, and the DeMux 300 is coupled to the photodetector array 700 through a third waveguide 430. A waveguide is used for coupling and transmission of an optical signal between devices.

FIG. 2 is a layout diagram of another implementation of the optical demultiplexing receiver chip according to this application. As shown in FIG. 2, the optical chip further includes:
a waveguide conversion structure 500, configured to couple and transmit the optical signal from the third waveguide 420 to a fourth waveguide 600. The waveguide conversion structure 500 is connected to the photodetector array 700 through the fourth waveguide 600, and the fourth waveguide 600 is used for coupling and transmission of the optical signal between the waveguide conversion structure 500 and the photodetector array 700.

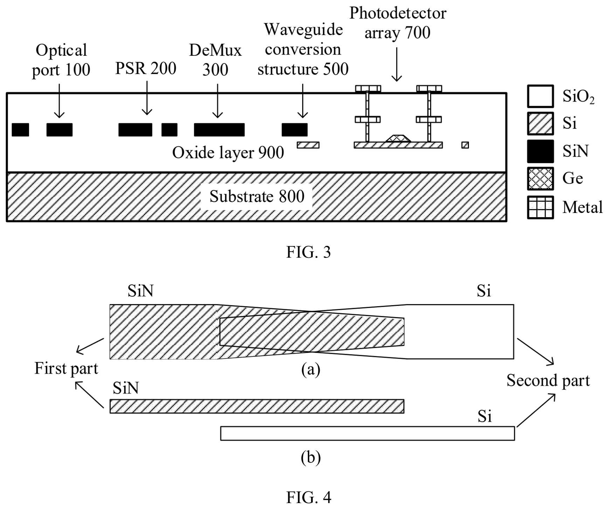

FIG. 3 is a cross-sectional diagram of the optical demultiplexing receiver chip according to this application.

As shown in FIG. 3, the optical chip includes a substrate 800. The substrate 800 is made of a silicon Si material, and an oxide layer 900 is provided on the substrate 800. The oxide layer 900 is made of silicon dioxide SiO₂. The oxide layer may also be referred to as a buried oxide layer.

The optical port 100, the PSR 200, and the DeMux 300 are made of a silicon nitride SiN material and disposed in the oxide layer 900. The optical port 100 is coupled to the PSR 200 through the first waveguide 410, the PSR 200 is coupled to the DeMux 300 through the second waveguide 420, and the DeMux 300 is coupled to the photodetector array 700 through the third waveguide 430. The first waveguide 410, the second waveguide 420, and the third waveguide 430 are made of SiN, and may be referred to as SiN waveguides.

Compared with a Si waveguide, the SiN waveguide has the following advantages: A refractive index of SiN is lower than that of Si, a waveguide formed by using SiN and the oxide layer has lower refractive index contrast, and a size of the SiN waveguide is large, so that sensitivity of SiN to a waveguide thickness is reduced, and a device yield may be improved; a thermo-optic coefficient of SiN is small and is less than that of Si by one order of magnitude, so that impact caused by a temperature change is greatly reduced; the SiN waveguide can be used to reduce complexity of an optical path and reduce a chip size; and a transmission loss of the SiN waveguide is reduced, so that an on-chip loss can be further reduced.

The fourth waveguide 600 may also be referred to as an SOI waveguide. The SOI waveguide may be structured as a strip (strip) waveguide, a rib/ridge (rib/ridge) waveguide with a large cross-sectional area, a slot (slot) waveguide, a photonic crystal (PhC) waveguide, a sub-wavelength grating (SWG) waveguide, a sub-wavelength grating slot (SWGS) waveguide, a surface plasmon polariton-slot (SPP-slot) waveguide, or the like. This is not limited in this application.

To connect waveguides made of different materials, the waveguide conversion structure 500 is disposed. The waveguide conversion structure 500 is made of the SiN material and an SOI material vertically from top to bottom, so that the optical signal is coupled and transmitted from the third waveguide 430 to the fourth waveguide 600.

FIG. 4 is a top view and a side view of a possible implementation of the waveguide conversion structure according to this application.

As shown in the top view (a) in FIG. 4, a first part of the waveguide conversion structure 500 is made of the SiN material, and a second part of the waveguide conversion structure 500 is made of the Si material. The first part and the second part overlap at a transition shadow, so that evanescent wave coupling is performed between the SiN waveguide and the Si waveguide. Effective refractive indexes of the waveguides are controlled by using cross sections of the waveguides, so that the optical signal is gradually coupled from the SiN waveguide to the Si waveguide. As shown in the side view (b) in FIG. 4, the SiN material and the SOI material do not need to be in contact, that is, there may be a gap between the SiN material and the SOI material. The first part and the second part of the waveguide conversion structure 500 each may be of a gradually narrowed long-strip shape shown in FIG. 3, or may be other shapes such as a triangle. A specific shape of the waveguide conversion structure 500 is not limited in this application.

In a possible implementation, the waveguide conversion structure may not be used in the implementation in FIG. 1. In this case, the SiN waveguide and a PD waveguide (for example, Si-Ge) are directly coupled to each other at the photodetector array. In this case, the third waveguide is the same as the fourth waveguide.

The photodetector array 700 is fabricated on an SOI substrate by using a semiconductor material that is epitaxially grown in a selective area. The semiconductor material includes but is not limited to germanium Ge, indium gallium arsenide InGaAs, gallium phosphide GaP, silicon Si, and the like. Germanium is used as an example in FIG. 3. A growth process of a semiconductor material of the PD may be an epitaxy process or another process. This is not limited in this application.

In a possible implementation, the photodetector array 700 may be a Ge PD array structure, and includes Ge PDs on four channels. Each PD implements optical-to-electrical conversion through a PIN junction and electrical connection by using a Ge absorption region. A Ge PD on each channel may use a lateral PIN structure or a vertical PIN structure.

It should be understood that the Ge PD on each channel may alternatively include a plurality of PDs connected in parallel, or may be implemented by using an APD structure.

Multi-wavelength light in any polarization state is input through the optical port 100, and the PSR 200 converts input TM-mode light into TE-mode light, and the TE-mode light is output through one port. The TE-mode light remains in the TE mode, is output through the other port. Then, the DeMux 300 separately performs filtering to implement multi-channel single-wavelength optical signals with a channel spacing of Δλ nm. Light at each output port is coupled to the SOI second waveguide 600 through the SiN-SOI waveguide conversion structure 500, and then coupled to the Ge PD photodetector array 700, to implement optical-to-electrical conversion and convert the optical signal into the electrical signal.

This application provides a plurality of structures of the wavelength demultiplexer DeMux 300.

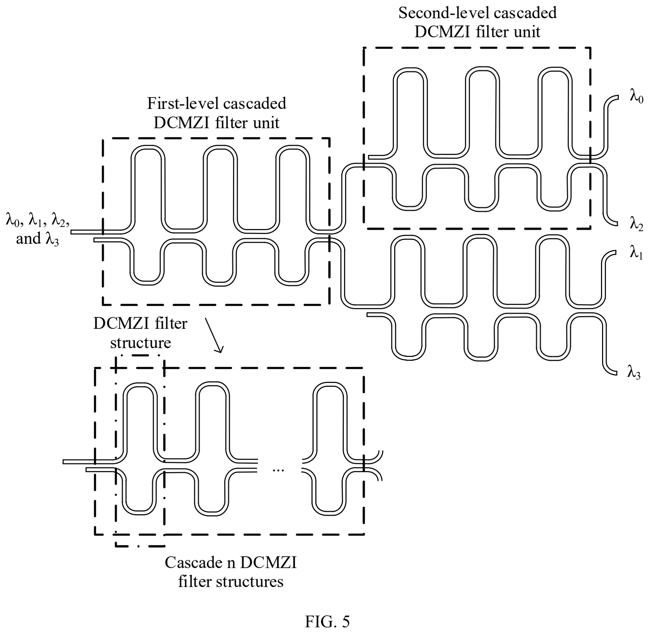

In a possible implementation, as shown in FIG. 5, the DeMux 300 is implemented by using a directional coupler Mach-Zehnder interferometer (directional coupler Mach-Zehnder interferometer, DCMZI) filter. The DeMux 300 includes M levels of cascaded DCMZI filter units, where an i^{th}-level cascaded DCMZI filter unit includes 2ⁱ cascaded DCMZI filter units. Each DCMZI unit may include N DCMZI filter structures, and each DCMZI filter structure includes two waveguide arms. There are a total of 2^{M} output ports, and 2^{M} optical signals of different wavelengths may be output. A wavelength spacing of the 2^{M} optical signals of different wavelengths is Δλ nm.

It should be understood that an optical path difference between paths of the two waveguide arms of the DCMZI filter structure can be used to filter the optical signals. A length of the waveguide arm in the accompanying drawings of this application is merely a comparison diagram, and a specific length of the waveguide arm is not limited in this application.

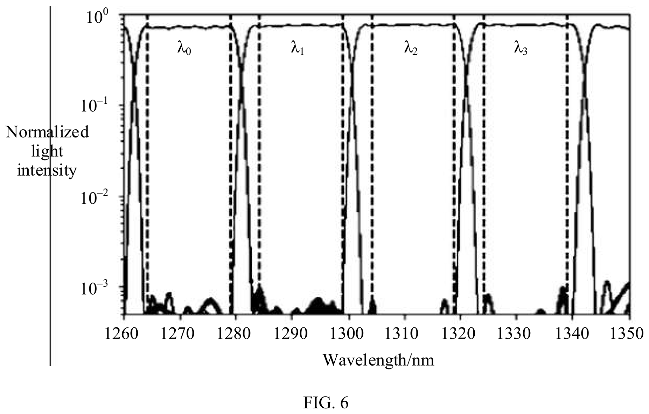

For example, the optical signals may be optical signals including four wavelengths: λ0, λ1, λ2, and λ3. The optical signals may be filtered with the wavelength spacing of Δλ nm by using a first-level cascaded DCMZI filter unit. To implement a higher extinction ratio (extinction ratio, ER), the cascaded DCMZI filter unit may alternatively use a multi-repetition structure. The optical signals may be filtered with a wavelength spacing of 2Δλ nm by using two second-level cascaded DCMZI filter units. To implement a higher ER, the second-level cascaded DCMZI filter units may also use the multi-repetition structure. Finally, the optical signals may be filtered with the wavelength spacing of Δλ nm. Light of different wavelengths λ0, λ1, λ2, and λ3 is output through four ports respectively, and a spectrum is shown in FIG. 6. A loss at a plurality of wavelengths with the spacing of Δλ nm is low.

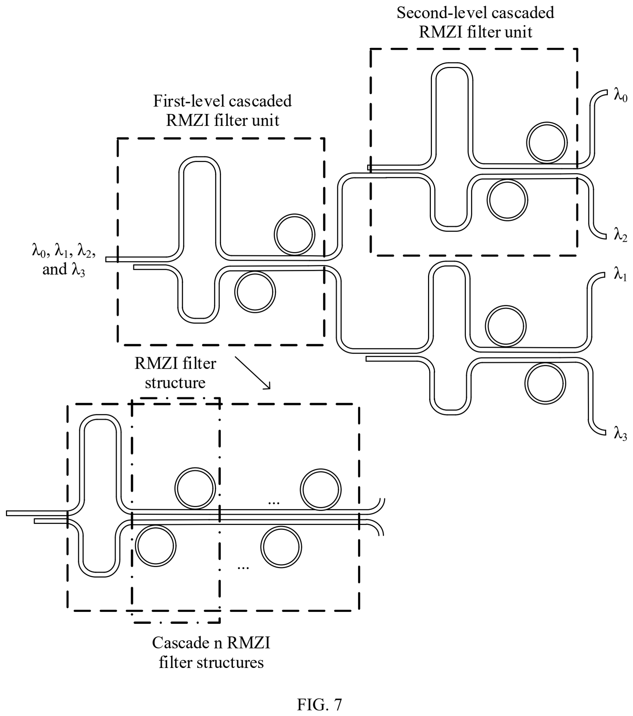

In another possible implementation, as shown in FIG. 7, the DeMux 300 is implemented by using a ring-assisted Mach-Zehnder interferometer (ring-assisted Mach-Zehnder interferometer, RMZI) filter. The DeMux 300 includes M levels of cascaded RMZI filter units, where an i^{th}-level cascaded RMZI filter unit includes 2ⁱ cascaded RMZI filter units. Each RMZI unit may include L RMZI filter structures, and each RMZI filter structure includes a microring resonant cavity. There are a total of 2^{M} output ports, and 2^{M} optical signals of different wavelengths may be output. A wavelength spacing of the 2^{M} optical signals of different wavelengths is Δλ nm.

It should be understood that the RMZI is enhanced in filtering characteristics based on an MZI by using the microring resonant cavity, and a beam splitter and a beam combiner in the RMZI may be of a structure like a directional coupler (directional coupler, DC), a Y-branch (Y-branch), a multimode interference coupler (multimode interference coupler, MMI), or a trident (trident)-type. In the accompanying drawings of this application, the beam splitter and the beam combiner use the DC structure only as an example. Structures of the beam splitter and the beam combiner in the RMZI are not limited in this application.

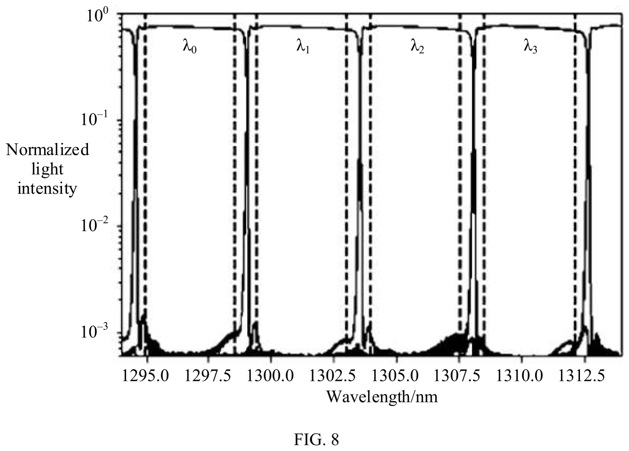

For example, the optical signals may be optical signals including four wavelengths: λ0, λ1, λ2, and λ3. The optical signals may be filtered with the wavelength spacing of Δλ nm by using a first-level cascaded RMZI filter unit. To implement a higher ER, the cascaded RMZI filter unit may alternatively use a multi-repetition structure. The optical signals may be filtered with a wavelength spacing of 2Δλ nm by using two second-level cascaded RMZI filter units. To implement a higher ER, the second-level cascaded RMZI filter units may also use the multi-repetition structure. Finally, the optical signals may be filtered with the wavelength spacing of Δλ nm. Light of different wavelengths λ0, λ1, λ2, and λ3 is output through four ports respectively, and a spectrum is shown in FIG. 8. A loss at a plurality of wavelengths with the spacing of Δλ nm is low.

The DCMZI and RMZI may be used separately or together.

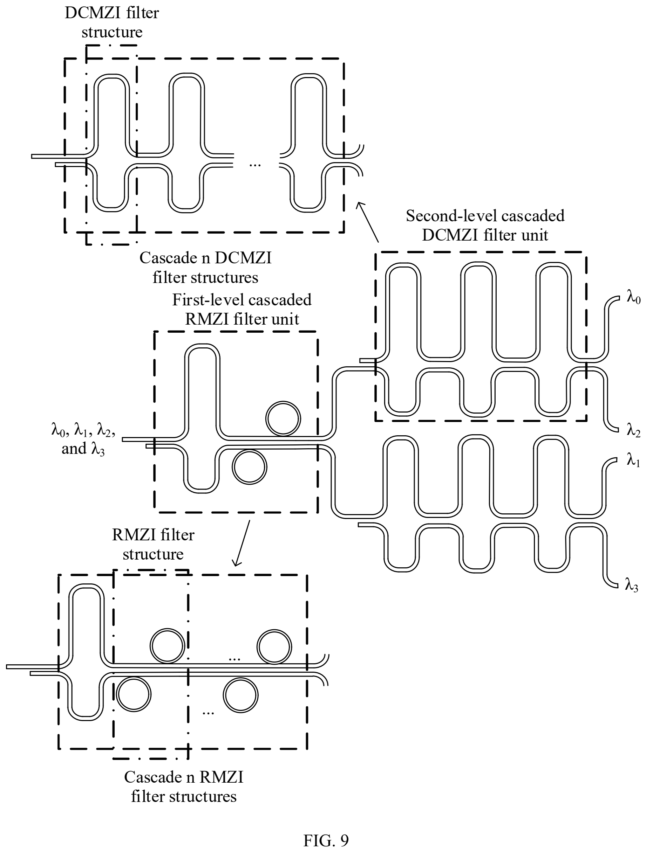

In another possible implementation, as shown in FIG. 9, the DeMux 300 is implemented by using a combination of an RMZI filter and/or a DCMZI filter. The DeMux 300 includes M levels of cascaded filter units, where an i^{th}-level cascaded filter unit includes 2ⁱ cascaded RMZI or DCMZI filter units. Each RMZI unit may include L RMZI filter structures, and each RMZI filter structure includes a microring resonant cavity. Each DCMZI unit may include N DCMZI filter structures, and each DCMZI filter structure includes two waveguide arms. There are a total of 2^{M} output ports, and 2^{M} optical signals of different wavelengths may be output. A wavelength spacing of the 2^{M} optical signals of different wavelengths is Δλ nm.

For example, the optical signals may be optical signals including four wavelengths: λ0, λ1, λ2, and λ3. The optical signals may be filtered with the wavelength spacing of Δλ nm by using a first-level cascaded RMZI filter unit. To implement a higher ER, the cascaded RMZI filter unit may alternatively use a multi-repetition structure. The optical signals may be filtered with a wavelength spacing of 2Δλ nm by using two second-level cascaded DCMZI filter units. To implement a higher ER, the second-level cascaded DCMZI filter units may also use the multi-repetition structure. Finally, the optical signals may be filtered with the wavelength spacing of Δλ nm. Light of different wavelengths λ0, λ1, λ2, and λ3 is output through four ports respectively.

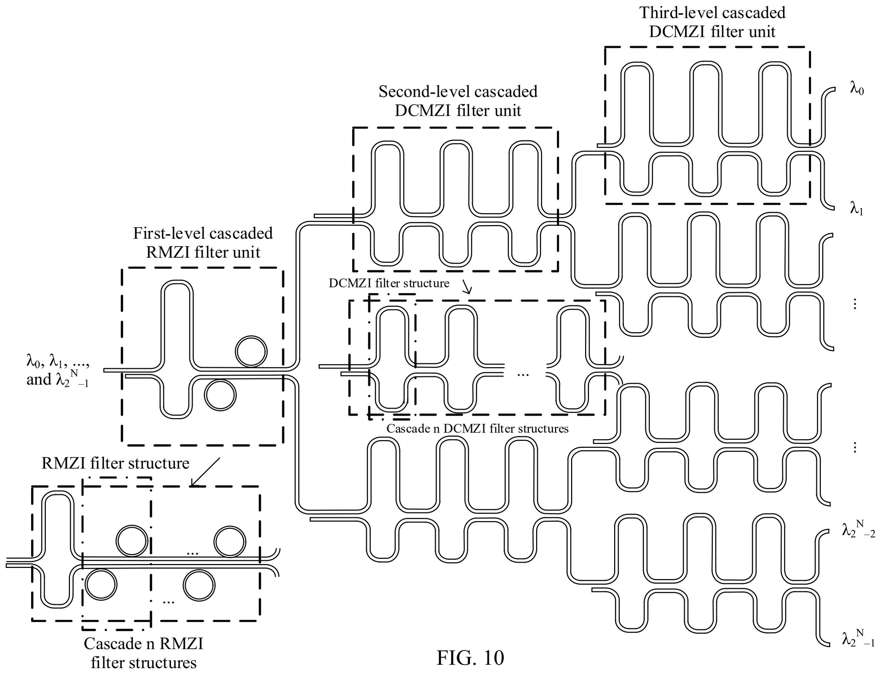

To implement filtering on more channels, the DeMux 300 may be implemented by using any combination of M levels of cascaded DCMZI or RMZI filter structures. As shown in FIG. 10, each level of cascaded DCMZI filter may include a plurality of cascaded DCMZIs, and each level of cascaded RMZI filter may include a plurality of cascaded RMZIs. In this way, filtering with the wavelength spacing of Δλ nm is finally implemented, and light of different wavelengths is output through 2^{M} ports.

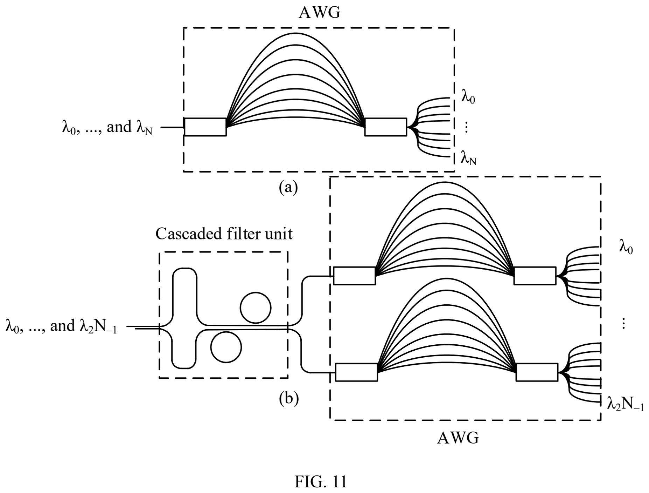

In another possible implementation, as shown in (a) in FIG. 11, the DeMux 300 may be implemented by using an AWG filter made of a SiN material. Finally, the optical signals may be filtered with the wavelength spacing of Δλ nm. Light of different wavelengths is output through K ports respectively.

To implement filtering on more channels, the DeMux 300 may be implemented by using a combination of cascaded DCMZI or RMZI filter structures and the AWG filter. As shown in (b) in FIG. 11, the DeMux 300 includes M levels of cascaded filter units, where an i^{th}-level cascaded filter unit includes 2ⁱ cascaded RMZI or DCMZI filter units. Each RMZI unit may include L RMZI filter structures, and each RMZI filter structure includes a microring resonant cavity. Each DCMZI unit may include N DCMZI filter structures, and each DCMZI filter structure includes two waveguide arms. There are 2^{M} AWG filter structures connected to an M^{th}-level filter unit, and each AWG filter includes K output ports. Therefore, the DeMux 300 has a total of K×2^{M} output ports, and may output K×2^{M} optical signals of different wavelengths. A wavelength spacing of the K×2^{M} optical signals of different wavelengths is Δλ nm.

A value of the wavelength spacing Δλ nm of multi-wavelength light may be controlled by adjusting a specific structure of a RMZI filter, a cascaded DCMZI filter, or the SiN AWG filter. A specific adjustment manner is not limited in this application.

According to the solution of this application, the DeMux device made of the SiN material is implemented by using the RMZI filter, the cascaded DCMZI filter, or the SiN AWG filter, so that a wavelength division demultiplexing function can be implemented, no additional cooler is required, and an optical transmission loss is low.

The optical chip provided in this application may further implement on-chip integration with a laser diode (laser diode, LD), a modulator, a heater (heater), a semiconductor optical amplifier (semiconductor optical amplifier, SOA), a variable optical attenuator (variable optical attenuator, VOA), a multiplexer Mux, and the like, to implement an on-chip integrated optical chip integrating transmitting and receiving.

In a possible implementation, an SOA device may be provided between the optical port 100 and the DeMux 300. The SOA device performs optical amplification when used in a scenario with low optical power.

In a possible implementation, a VOA may be provided between the optical port 100 and the DeMux 300. Contrary to the SOA, the VOA device performs optical attenuation when used in a scenario with high optical power at a receive end.

In a possible implementation, the LD, the modulator, the heater, and the Mux may constitute a transmit- end assembly. The LD is an optical source at a transmit end. The modulator is an electro-optic modulator, converts electrical signals into optical signals, and transmits the optical signals to the Mux through waveguides for multiplexing. The optical signals are finally output to the exterior of the chip through the optical port. The heater implements waveguide phase modulation by changing a temperature through heating, and then adjusts filtering characteristics of the DeMux and the Mux to implement a desired passband. The heater or another phase shifter at the transmit end is mainly used to adjust an initial phase of the modulator to reach a desired operating point.

According to the foregoing optical chip, this application provides an optical signal transmission method.

The method includes at least the following steps.

A first optical signal enters an optical chip from a fiber through an optical port, where the optical port is coupled to the fiber, and the first optical signal includes a component in a transverse magnetic TM mode. A PSR performs first processing on the first optical signal to generate a second optical signal, where the second optical signal is in a transverse electric TE mode, and the second optical signal is a single-channel multi-wavelength optical signal.

The first optical signal includes the component in the TM mode and the component in the TE mode. The TM-mode optical signal input through the PSR is converted into the TE-mode optical signal and output through one port. The TE-mode optical signal is transmitted in the TE mode and output through the other port.

At least one DeMux performs second processing on the second optical signal to generate a third optical signal, where the third optical signal is a multi-channel single-wavelength optical signal. A photodetector array converts the third optical signal into an electrical signal. The optical port, the PSR, and the at least one DeMux are made of silicon nitride SiN.

In a possible implementation, the PSR is coupled to the optical port through a first waveguide, and the at least one DeMux is coupled to the PSR through a second waveguide. The first waveguide and the second waveguide are made of SiN.

The photodetector array is connected to the at least one DeMux through a third waveguide, and the third waveguide is made of SiN.

In a possible implementation, the third optical signal is further coupled and transmitted from a third waveguide to a fourth waveguide by using a waveguide conversion structure.

The waveguide conversion structure includes a first part and a second part, where the first part is coupled to the at least one DeMux through the third waveguide, the second part is coupled to the photodetector array through the fourth waveguide, and the first part and the third waveguide are made of SiN.

The second part of the waveguide conversion structure and the fourth waveguide are made of silicon Si.

In a possible implementation, the DeMux includes M levels of cascaded filter units, where an i^{th}-level cascaded filter unit includes 2ⁱ DCMZIs or 2ⁱ RMZIs. The DCMZI includes N repeated DCMZI filter structures, and the DCMZI filter structure includes two waveguide arms. The RMZI includes L repeated RMZI filter structures, and the RMZI filter structure includes a microring resonant cavity. M, N, and L are positive integers, and i∈[1, M].

The third optical signal includes 2^{M} single-wavelength optical signals of different wavelengths.

In a possible implementation, the DeMux further includes 2^{M} AWG filters, the AWG filter is connected to an M^{th}-level cascaded filter unit in the M levels of cascaded filter units, each AWG filter includes an output port and an arrayed waveguide, the third optical signal is output through the output port, and the third optical signal includes K×2^{M} single-wavelength optical signals of different wavelengths.

In a possible implementation, the DeMux is an AWG filter, the AWG filter includes an output port and an arrayed waveguide, the third optical signal is output through the output port, and the third optical signal includes K single-wavelength optical signals of different wavelengths.

According to the foregoing optical chip, this application further provides an optical chip fabrication method.

The method includes: providing a silicon-on-insulator SOI substrate, where the SOI includes a silicon substrate and an oxide layer; disposing an optical port, a polarization splitter and rotator PSR, and at least one wavelength demultiplexer DeMux in the oxide layer; and fabricating a photodetector array on the silicon substrate, where the optical port, the PSR, and the at least one DeMux are made of SiN.

The optical port is coupled to a fiber, and is configured to receive a first optical signal from the fiber, where the first optical signal includes a component in a transverse magnetic TM mode. The PSR is configured to perform first processing on the first optical signal to generate a second optical signal, where the second optical signal is in a transverse electric TE mode, and the second optical signal is a single-channel multi-wavelength optical signal. The at least one DeMux is configured to perform second processing on the second optical signal to generate a third optical signal, where the third optical signal is a multi-channel single-wavelength optical signal. The photodetector array is configured to convert the third optical signal into an electrical signal.

A process of fabricating the optical port, the PSR, and the DeMux is not limited in this application.

The photodetector array may be fabricated on the SOI substrate by using a semiconductor material that is epitaxially grown in a selective area. The semiconductor material includes but is not limited to germanium Ge, indium gallium arsenide InGaAs, gallium phosphide GaP, silicon Si, and the like. A growth process of a semiconductor material of the PD may be an epitaxy process or another process. This is not limited in this application.

In a possible implementation, a first waveguide and a second waveguide are fabricated, where the PSR is coupled to the optical port through the first waveguide, the at least one DeMux is coupled to the PSR through the second waveguide, and the first waveguide and the second waveguide are made of SiN.

In a possible implementation, a third waveguide is fabricated, where the photodetector array is connected to the at least one DeMux through the third waveguide, and the third waveguide is made of SiN.

In a possible implementation, a waveguide conversion structure is disposed, and a fourth waveguide is fabricated. The waveguide conversion structure is configured to couple and transmit the third optical signal from the third waveguide to the fourth waveguide, and includes a first part and a second part, the first part is coupled to the at least one DeMux through the third waveguide, the second part is coupled to the photodetector array through the fourth waveguide, and the first part and the third waveguide are made of SiN.

The second part of the waveguide conversion structure and the fourth waveguide are made of silicon Si.

In a possible implementation, the DeMux includes M levels of cascaded filter units, where an i^{th}-level cascaded filter unit includes 2ⁱ DCMZIs or 2ⁱ RMZIs. The DCMZI includes N repeated DCMZI filter structures, and the DCMZI filter structure includes two waveguide arms. The RMZI includes L repeated RMZI filter structures, and the RMZI filter structure includes a microring resonant cavity. M, N, and L are positive integers, and i∈[1, M].

In a possible implementation, the DeMux further includes 2^{M} arrayed waveguide grating AWG filters, the AWG filter is connected to an M^{th}-level cascaded filter unit in the M levels of cascaded filter units, each AWG filter includes an output port and an arrayed waveguide, the third optical signal is output through the output port, and the third optical signal includes K×2^{M} single-wavelength optical signals of different wavelengths.

In a possible implementation, the DeMux is an AWG filter, the AWG filter includes an output port and an arrayed waveguide, the third optical signal is output through the output port, and the third optical signal includes K single-wavelength optical signals of different wavelengths.

In a possible implementation, the photodetector array uses at least one of the following structures: a PN junction photodiode PN PD, a PIN photodiode PIN PD, an avalanche photodiode APD, a single-photon avalanche diode SPAD, a Schottky barrier diode SBD, and a silicon photomultiplier SiPM.

In a possible implementation, at least one of a semiconductor optical amplifier SOA, a laser diode LD, a modulator, a heater (heater), a variable optical attenuator VOA, and a multiplexer Mux is disposed.

An embodiment of this application further provides an optical module, including: a housing; a substrate; an electrical chip, configured to: generate a radio frequency signal or process a radio frequency signal, and located on the substrate; the optical chip described above, located on the substrate; and a signal line, located on the substrate, and configured to transmit the radio frequency signal between the electrical chip and the optical chip.

An embodiment of this application further provides a communication device, including: a receiver, including the optical module described above; and/or a transmitter, including the optical module described above.

An embodiment of this application further provides a communication device, including: a transceiver, configured to receive or send a signal, where the transceiver includes the optical module described above, and the optical module is configured to modulate or demodulate the signal; and a processor, configured to perform signal processing on the signal.

In several embodiments provided in this application, it should be understood that the disclosed apparatuses may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of units. Some or all of the units may be selected based on an actual requirement to achieve the objectives of the solutions of embodiments.

It should be understood that different embodiments may be used independently, or may be used in combination based on some internal or external connections. Different implementations in embodiments may be used independently or in combination.

It should be understood that the term "and/or" in this specification describes only an association between associated objects and indicates that three relationships may exist. For example, A and/or B may indicate the following three cases: Only A exists, both A and B exist, and only B exists. In addition, the character "/" in this specification generally indicates an "or" relationship between the associated objects.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical chip, comprising:
an optical port, coupled to a fiber and configured to receive a first optical signal from the fiber, wherein the first optical signal comprises a component in a transverse magnetic TM mode;
a polarization splitter and rotator PSR, configured to perform first processing on the first optical signal to generate a second optical signal, wherein the second optical signal is in a transverse electric TE mode, and the second optical signal is a single-channel multi-wavelength optical signal;
at least one wavelength demultiplexer DeMux, configured to perform second processing on the second optical signal to generate a third optical signal, wherein the third optical signal is a multi-channel single-wavelength optical signal; and
a photodetector array, configured to convert the third optical signal into an electrical signal, wherein
the optical port, the PSR, and the at least one DeMux are made of silicon nitride SiN.

2. The optical chip according to claim 1, wherein the PSR is coupled to the optical port through a first waveguide, the at least one DeMux is coupled to the PSR through a second waveguide, and the first waveguide and the second waveguide are made of SiN.

3. The optical chip according to claim 2, wherein the photodetector array is connected to the at least one DeMux through a third waveguide, and the third waveguide is made of SiN.

4. The optical chip according to claim 2, wherein the optical chip further comprises: a waveguide conversion structure, configured to couple and transmit the third optical signal from a third waveguide to a fourth waveguide, and
comprising a first part and a second part, wherein the first part is coupled to the at least one DeMux through the third waveguide, the second part is coupled to the photodetector array through the fourth waveguide, and the first part and the third waveguide are made of SiN.

5. The optical chip according to claim 4, wherein the second part of the waveguide conversion structure and the fourth waveguide are made of silicon Si.

6. The optical chip according to any one of claims 1 to 5, wherein the DeMux comprises M levels of cascaded filter units, the i^{th}-level cascaded filter unit comprises 2ⁱ directional coupler Mach-Zehnder interferometers DCMZIs or 2ⁱ ring-assisted Mach-Zehnder interferometers RMZIs, the DCMZI comprises N repeated DCMZI filter structures, the DCMZI filter structure comprises two waveguide arms, the RMZI comprises L repeated RMZI filter structures, the RMZI filter structure comprises a microring resonant cavity, M, N, and L are positive integers, and i∈[1, M].

7. The optical chip according to claim 6, wherein the third optical signal comprises 2^{M} single-wavelength optical signals of different wavelengths.

8. The optical chip according to any one of claims 1 to 5, wherein the DeMux is an arrayed waveguide grating AWG filter, the AWG filter comprises an output port and an arrayed waveguide, the third optical signal is output through the output port, and the third optical signal comprises K single-wavelength optical signals of different wavelengths.

9. The optical chip according to claim 6, wherein the DeMux further comprises 2^{M} arrayed waveguide grating AWG filters, the AWG filter is connected to an M^{th}-level cascaded filter unit in the M levels of cascaded filter units, each AWG filter comprises an output port and an arrayed waveguide, the third optical signal is output through the output port, and the third optical signal comprises K×2^{M} single-wavelength optical signals of different wavelengths.

10. The optical chip according to any one of claims 1 to 9, wherein the photodetector array uses at least one of the following structures: a PN junction photodiode PN PD, a PIN photodiode PIN PD, an avalanche photodiode APD, a single-photon avalanche diode SPAD, a Schottky barrier diode SBD, and a silicon photomultiplier SiPM.

11. The optical chip according to any one of claims 1 to 10, wherein the photodetector array is a detector made of a semiconductor material that is epitaxially grown on a silicon-on-insulator SOI.

12. The optical chip according to any one of claims 1 to 11, wherein the optical chip further comprises at least one of a semiconductor optical amplifier SOA, a laser diode LD, a modulator, a heater (heater), a variable optical attenuator VOA, and a multiplexer Mux.

13. An optical signal transmission method, comprising:
entering, by a first optical signal, an optical chip from a fiber through an optical port, wherein the optical port is coupled to the fiber, and the first optical signal comprises a component in a transverse magnetic TM mode;
performing, by a polarization splitter and rotator PSR, first processing on the first optical signal to generate a second optical signal, wherein the second optical signal is in a transverse electric TE mode, and the second optical signal is a single-channel multi-wavelength optical signal;
performing, by at least one wavelength demultiplexer DeMux, second processing on the second optical signal to generate a third optical signal, wherein the third optical signal is a multi-channel single-wavelength optical signal; and
converting, by a photodetector array, the third optical signal into an electrical signal, wherein
the optical port, the PSR, and the at least one DeMux are made of silicon nitride SiN.

14. The method according to claim 13, wherein the PSR is coupled to the optical port through a first waveguide, the at least one DeMux is coupled to the PSR through a second waveguide, and the first waveguide and the second waveguide are made of SiN.

15. The method according to claim 14, wherein the photodetector array is connected to the at least one DeMux through a third waveguide, and the third waveguide is made of SiN.

16. The method according to claim 14, wherein the third optical signal is further coupled and transmitted from a third waveguide to a fourth waveguide by using a waveguide conversion structure, the waveguide conversion structure comprises a first part and a second part, the first part is coupled to the at least one DeMux through the third waveguide, the second part is coupled to the photodetector array through the fourth waveguide, and the first part and the third waveguide are made of SiN.

17. The method according to claim 16, wherein the second part of the waveguide conversion structure and the fourth waveguide are made of silicon Si.

18. The method according to any one of claims 13 to 17, wherein the DeMux comprises M levels of cascaded filter units, the i^{th}-level cascaded filter unit comprises 2ⁱ directional coupler Mach-Zehnder interferometers DCMZIs or 2ⁱ ring-assisted Mach-Zehnder interferometers RMZIs, the DCMZI comprises N repeated DCMZI filter structures, the DCMZI filter structure comprises two waveguide arms, the RMZI comprises L repeated RMZI filter structures, the RMZI filter structure comprises a microring resonant cavity, M, N, and L are positive integers, and i∈[1, M].

19. The method according to claim 18, wherein the third optical signal comprises 2^{M} single-wavelength optical signals of different wavelengths.

20. The method according to any one of claims 13 to 17, wherein the DeMux is an arrayed waveguide grating AWG filter, the AWG filter comprises an output port and an arrayed waveguide, the third optical signal is output through the output port, and the third optical signal comprises K single-wavelength optical signals of different wavelengths.

21. The method according to claim 18, wherein the DeMux further comprises 2^{M} arrayed waveguide grating AWG filters, the AWG filter is connected to an M^{th}-level cascaded filter unit in the M levels of cascaded filter units, each AWG filter comprises an output port and an arrayed waveguide, the third optical signal is output through the output port, and the third optical signal comprises K×2^{M} single-wavelength optical signals of different wavelengths.

22. An optical chip fabrication method, comprising:
providing a silicon-on-insulator SOI substrate, wherein the SOI comprises a silicon substrate and an oxide layer;
disposing an optical port, a polarization splitter and rotator PSR, and at least one wavelength demultiplexer DeMux in the oxide layer; and
fabricating a photodetector array on the silicon substrate, wherein the optical port, the PSR, and the at least one DeMux are made of silicon nitride SiN, wherein
the optical port is coupled to a fiber, and is configured to receive a first optical signal from the fiber, wherein the first optical signal comprises a component in a transverse magnetic TM mode;
the PSR is configured to perform first processing on the first optical signal to generate a second optical signal, wherein the second optical signal is in a transverse electric TE mode, and the second optical signal is a single-channel multi-wavelength optical signal;
the at least one DeMux is configured to perform second processing on the second optical signal to generate a third optical signal, wherein the third optical signal is a multi-channel single-wavelength optical signal; and
the photodetector array is configured to convert the third optical signal into an electrical signal.

23. The method according to claim 22, wherein the method further comprises: fabricating a first waveguide and a second waveguide, wherein the PSR is coupled to the optical port through the first waveguide, the at least one DeMux is coupled to the PSR through the second waveguide, and the first waveguide and the second waveguide are made of SiN.

24. The method according to claim 23, wherein the method further comprises: fabricating a third waveguide, wherein the photodetector array is connected to the at least one DeMux through the third waveguide, and the third waveguide is made of SiN.

25. The method according to claim 23, wherein the method further comprises: disposing a waveguide conversion structure, and fabricating a fourth waveguide, wherein the waveguide conversion structure is configured to couple and transmit the third optical signal from the third waveguide to the fourth waveguide, and comprises a first part and a second part, the first part is coupled to the at least one DeMux through the third waveguide, the second part is coupled to the photodetector array through the fourth waveguide, and the first part and the third waveguide are made of SiN.

26. The method according to claim 25, wherein the second part of the waveguide conversion structure and the fourth waveguide are made of silicon Si.

27. The method according to any one of claims 22 to 26, wherein the DeMux comprises M levels of cascaded filter units, the i^{th}-level cascaded filter unit comprises 2ⁱ directional coupler Mach-Zehnder interferometers DCMZIs or 2ⁱ ring-assisted Mach-Zehnder interferometers RMZIs, the DCMZI comprises N repeated DCMZI filter structures, the DCMZI filter structure comprises two waveguide arms, the RMZI comprises L repeated RMZI filter structures, the RMZI filter structure comprises a microring resonant cavity, M, N, and L are positive integers, and i∈[1, M].

28. The method according to any one of claims 22 to 26, wherein the DeMux is an arrayed waveguide grating AWG filter, the AWG filter comprises an output port and an arrayed waveguide, the third optical signal is output through the output port, and the third optical signal comprises K single-wavelength optical signals of different wavelengths.

29. The method according to claim 27, wherein the DeMux further comprises 2^{M} arrayed waveguide grating AWG filters, the AWG filter is connected to an M^{th}-level cascaded filter unit in the M levels of cascaded filter units, each AWG filter comprises an output port and an arrayed waveguide, the third optical signal is output through the output port, and the third optical signal comprises K×2^{M} single-wavelength optical signals of different wavelengths.

30. The method according to any one of claims 22 to 29, wherein the photodetector array uses at least one of the following structures: a PN junction photodiode PN PD, a PIN photodiode PIN PD, an avalanche photodiode APD, a single-photon avalanche diode SPAD, a Schottky barrier diode SBD, and a silicon photomultiplier SiPM.

31. The method according to any one of claims 22 to 30, wherein the method further comprises: disposing at least one of a semiconductor optical amplifier SOA, a laser diode LD, a modulator, a heater (heater), a variable optical attenuator VOA, and a multiplexer Mux.

32. An optical module, comprising a housing, wherein
a substrate;
an electrical chip, configured to generate a radio frequency signal or process a radio frequency signal, and located on the substrate;
the optical chip according to any one of claims 1 to 12, located on the substrate; and
a signal line, located on the substrate, and configured to transmit the radio frequency signal between the electrical chip and the optical chip.

33. A communication device, comprising:
a receiver, comprising the optical module according to claim 32; and/or
a transmitter, comprising the optical module according to claim 32.

34. A communication device, comprising:
a transceiver, configured to: receive or send a signal, wherein the transceiver comprises the optical module according to claim 32, and the optical module is configured to modulate or demodulate the signal; and
a processor, configured to perform signal processing on the signal.
